# NEUE EUROPÄISCHE PATENTSCHRIFT

(11) **EP 0 489 705 B2**
(45) Veröffentlichungstag und Bekanntmachung des Hinweises auf die Entscheidung über den Einspruch: **06.05.1999**
(45) Hinweis auf die Patenterteilung: 10.05.1995
(21) Anmeldenummer: 91890294.1
(22) Anmeldetag: 03.12.1991
(51) Int. Cl.: B09B 3/00, B09B 1/00, B01J 4/00, E21B 43/00, F17C 7/00

(54) **Verfahren und Vorrichtung zum Injizieren sauerstoffhaltiger Gase**
Method and device for injecting gases containing oxygen
Procédé et dispositif pour l'injection de gaz contenant de l'oxygène

(30) Priorität: 03.12.1990 AT 2442/90
(43) Veröffentlichungstag der Anmeldung: 10.06.1992
(73) Patentinhaber: AGA AKTIEBOLAG, 181 81 Lidingö (SE)
(72) Erfinder: Ranner, Dietrich, Dipl.-Ing., A-5301 Eugendorf (Salzburg) (AT)
(74) Vertreter: Casati, Wilhelm, Dipl.-Ing.

(56) Entgegenhaltungen:
- EP-A- 0 173 667
- EP-A- 0 370 409
- EP-B- 0 106 308
- EP-B- 0 180 088
- BE-A- 465 118
- DE-A- 3 238 003
- DE-A- 3 529 551
- DE-A- 3 601 979
- DE-A- 3 605 042
- DE-A- 3 739 126
- DE-A- 4 040 838
- DE-C- 2 742 606
- JP-B-53 046 484
- US-A- 3 808 822
- US-A- 4 883 589

## Beschreibung

Bei Großkompostieranlagen für städtischen Abfall wurde es bekannt (EP-A2-340 177), in einem tunnelartigen Behälter von 100 m Länge und einem Querschnitt von 6 x 6 m², mittels Belüftungs-, Entlüftungs- und Befeuchtungseinrichtungen einen kontinuierlichen Rotteprozeß aufrechtzuerhalten. Der Müll wird dabei unsortiert aufgegeben, da die Abtrennung nicht verrottbarer Müllanteile vom durch den Rotteprozeß entstandenen Kompost leicht durchgeführt werden kann. Über spezielle, nicht naher beschriebene Einrichtungen wird unter leichtem Überdruck Luft dem Müll zugeführt.

Das bekannte Verfahren dient sohin der kontinuierlichen Behandlung von Frischmüll in einer geschlossenen Anlage.

Demgegenüber betrifft die Erfindung ein Verfahren zum Injizieren sauerstoffhaltiger Gase, insbesondere Luft, zu kontaminiertem, körnigem oder stückigem Material, z.B. in Mülldeponien.

Kontaminierte Böden, Altlasten an Industriestandorten und aufgelassene Hausmülldeponien stellen Gefahren für Mensch, Tier und Umwelt dar. Die Sanierung dieser Standorte erfolgte bisnun überwiegend durch Ausräumen, Reinigen oder neuerliches Deponieren an gesicherten Standorten. Diese "off situ"-Verfahren sind sehr aufwendig und entsprechend teuer.

Wesentlich günstiger würden sich biologische "in situ" Sanierungsverfahren stellen, bei denen der kontaminierte Bereich selbst als Bioreaktor bearbeitet und Schadstoffe bakteriell abgebaut werden.

Durch das Dokument WO 90/07992 wurde ein Verfahren zur biologischen Reinigung von Böden bekannt, die z.B. als langjähriger Standort einer Industrieanlage mit biologisch abbaubaren Schadstoffen verseucht wurden. Dabei wird der kontaminierte Boden ausgekoffert und bevorzugt durch Zumischen von gebrochenem Beton (Bauschutt) zu einem gut durchlüftbaren Körper aufbereitet. Das aufbereitete Material wird auf präpariertem Untergrund zu Regenerationsmieten zwischen 2 und 3 m Höhe aufgeschichtet. Die Mieten werden während des mikrobiologischen Schadstoffabbaus entweder durch Einblasen von Luft oder durch Absaugen der Deponiegase mit Sauerstoff versorgt, wobei die gleichmäßige Durchlüftung durch ein Netz von Rohren im Deponiekörper sichergestellt werden soll. Nach dem bekannten Verfahren werden unter großem Aufwand Schadstoffe aerob abgebaut. Das Erdreich muß dabei jedoch ausgekoffert und so aufbereitet werden, daß auch bei druckloser Sauerstoffzufuhr ausreichend Sauerstoff zu den Schadstoffen gelangt. Es ist hiebei eine gesicherte Deponiefläche zu errichten, so daß die Aufbereitung von Altdeponien praktisch nicht möglich ist, weil solche Deponien nicht geöffnet werden dürfen, da sonst übelriechende Stoffe und giftige Gase in die Umwelt gelangen könnten.

Durch die EP-A1 0 413 947 wurde ein Verfahren zur Reinigung von schadstoffhaltigen Böden bekannt, bei dem ohne Transport des Bodens an die Bodenoberfläche eine Auflockerung des Bodengefüges mittels einer unter hohem Druck eingebrachten Flüssigkeit fortschreitend jeweils innerhalb mindestens eines weitgehend zylindrischen Bodenkörpers erfolgt. Außer zur Auflockerung des Bodens dient die Flüssigkeit als Träger- und Transportmedium für mindestens einen den jeweiligen Schadstoff an Ort und Stelle (in situ) abbauenden und/oder umwandelnden Wirkstoff. Der Wirkstoff kann ein chemisches Mittel sein, das mit den Schadstoffen zu harmlosen Verbindungen reagiert, oder ein biologischer Nährstoff etc., der die Beseitigung der Schadstoffe direkt im Boden ermöglicht. Die für biologische Maßnahmen notwendige Sauerstoffzufuhr erfolgt meist über H₂O₂ mit dem Problem der Toxizität für Bakterien. Das bekannte Sprühverfahren ist zur Behandlung von Altdeponien nicht geeignet und kann auch in gewachsenen Böden nur dann eingesetzt werden, wenn eine Gefährdung des Grundwassers durch die in den Boden eingebrachte Flüssigkeit und den zugesetzten Wirkstoff nicht möglich ist.

Neben boden- und schadstoffspezifischen Problemen war es bisher nicht möglich, im gesamten kontaminierten Bereich die für biologische Verfahren notwendigen aeroben Verhältnisse sicherzustellen. Versuche durch Einpumpen von Wasserstoffperoxyd (H₂O₂), und Nitrat (NO₃) oder durch Einblasen von Luft aerobe Verhältnisse herzustellen, brachten nur Teilerfolge, da große Bereiche der kontaminierten Böden von der Sauerstoffzufuhr abgeschnitten blieben und daher am biologischen Abbauprozeß nicht teilnehmen konnten. Der Grund dafür ist darin zu sehen, daß die Sauerstoffträger vorwiegend in Klüfte und durchlüftbare Zonen der Böden eindringen, wobei durch den einsetzenden Rotteprozeß regelrechte Belüftungskanäle entstehen, dichtgelagerte Zonen der Böden, mangels entsprechenden Drucks, jedoch keinen Sauerstoff erhielten.

Hier Abhilfe zu schaffen, ist eines der Ziele der Erfindung. Vorgeschlagen wird hiezu, daß erfindungsgemäß das sauerstoffhaltige Gas intermittierend, insbes. mit einer Frequenz von 1/30 bis 1/10 Hz, unter hohem Druck, z.B. im Bereich zwischen 2 bis 10 bar, schlagartig in das kontaminierte Material eingeblasen (eingeschossen) wird, wobei die Dauer eines Einblasevorganges bevorzugt im Millisekundenbereich liegt.

Gemäß der erfindungsgemäßen Vorgangsweise wird im Gegensatz zur bisher üblichen Methode, die Luft nicht kontinuierlich und mit bloß geringem Überdruck (0,1 - 0,3 bar) in das Erdreich oder die Mülldeponie eingeblasen, sondern intermittierend pulsierend und unter wesentlich höheren Drücken (2 - 10 bar) quasi eingeschossen. Die Gesamtluftmenge bleibt jedoch gegenüber der bisher angewandten Methode gleich, der Impuls ist jedoch bei dem im Bereich von Millisekunden ablaufenden Einblasvorgang so groß, daß, unbeschadet von eventuell vorhandenen Klüften und porösen Bereichen, die Luft auch in dicht gelagerte Zonen des kontaminierten Bodens problemlos eindringt. Damit können im gesamten kontaminierten Bereich aerobe Verhältnisse erreicht werden.

Als sauerstoffhaltiges Gas ist es besonders zweckmäßig, mit Sauerstoff angereicherte Luft zu verwenden. Die durch das schlagartige Zuführen des sauerstoffhaltigen Gases aus dem kontaminierten Material verdrängten Gase werden lokal abgesaugt, wobei gegebenenfalls das in der Zeiteinheit abgesaugte Volumen größer ist als das in der gleichen Zeiteinheit zugeführte sauerstoffhaltige Gas.

Werden zur Gaszufuhr Lanzen verwendet, kann die explosionsartige Zufuhr des Gases dadurch erreicht werden, daß man sich einer Vorrichtung bedient, die sich dadurch auszeichnet, daß erfindungsgemäß die Lanze an einem Ende durch die Stirnfläche eines Kolbens verschließbar ist, der entgegen dem Druck einer Feder in einem Zylinder hin- und herbewegbar, insbesondere gleitbar gelagert ist, der über eine, bevorzugt den Kolben durchsetzende Öffnung, mit dem Innenraum eines Windkessels in Verbindung steht, wobei der Kolbenboden in dem der Öffnung der Lanze gegenüberliegenden Bereich mit Bohrungen versehen ist, die in einen im Inneren des Kolbens befindlichen Raum führen, der über eine, durch eine Feder belastete Ventilplatte verschließbare Öffnung mit dem Hubraum des Zylinders des Kolbens verbindbar ist. Diese Vorrichtung gestattet es, das Innere der Lanze plötzlich mit dem Druckraum des Windkessels für nur kurze Zeit zu verbinden und dadurch das sauerstoffhaltige Gas schlagartig aus dem Windkessel abzuführen und über die Lanze in den kontaminierten Boden zu injizieren.

In weiterer Ausgestaltung der erfindungsgemäßen Vorrichtung kann vorgesehen werden, daß die Lanze in den Windkessel dicht eingesetzt ist, wobei das die Ausblaseperforationen aufweisende Endstück der Lanze außerhalb des Windkessels angeordnet ist. Hiebei wird jede Lanze von einem ihr zugeordneten Windkessel unmittelbar versorgt, so daß jeder Lanze eine ausreichende Speicherkapazität an sauerstoffhaltigem Gas zur Verfügung steht.

Die Belastung der Ventilplatte kann in einfacher Weise verändert werden, wenn in weiterer Ausgestaltung der Erfindung die durch die Ventilplatte verschließbare Öffnung in einem, in den Kolben eingesetzten, bevorzugt in axialer Richtung des Kolbens verstellbaren Dichtring angeordnet ist. Damit ist es möglich, den Druck, bei dessen Erreichen die Ventilplatte öffnet, zu regulieren. Diese Regulierung kann einfach vorgenommen werden, wenn der Dichtring in den Kolben eingeschraubt ist. Zur Verbesserung der schlagartigen Gaszufuhr in den kontaminierten Boden ist es von Vorteil, wenn in besonderer Ausgestaltung der Erfindung der Kolben die Lanze seitlich überragt. Hiedurch steht für den in Richtung der Öffnungsbewegung des Kolbens wirkenden Druck des Gases im Windkessel eine große Angriffsfläche zur Verfügung, wodurch die in Schließrichtung wirkende Kraft der den Kolben belastenden Feder rasch überwunden wird und der Kolben sich in die Öffnungsstellung bewegt.

Einem raschen Öffnen des die Lanze verschließenden Kolbens ist es förderlich, wenn der Gesamtquerschnitt der im Boden des Kolbens angeordneten Bohrungen, die den Innenraum der Lanze mit dem Raum im Kolben verbinden, größer ist als der Querschnitt der Öffnung, über welche der Hubraum im Zylinder mit dem Windkessel verbunden ist. Um den Kolben verschleißfrei im Zylinder zu bewegen, ist es zweckmäßig, wenn in besonderer Gestaltung der Erfindung der Kolben über eine Rollmembran mit dem Zylinder verbunden ist.

Eine gezielte Abfuhr der verdrängten Gase ist erreichbar, wenn hiefür an eine Saugpumpe angeschlossene Lanzen vorgesehen sind, wobei gegebenenfalls die Saugpumpe auslaßseitig an ein Filter angeschlossen ist. Ist ein Filter vorgesehen, so kann ein etwaiger Schadstoffausstoß weiter reduziert werden. Die Saugpumpe wird hiebei zweckmäßig so dimensioniert, daß dauernd ein Druckgefälle von den Lanzen für die schlagartige Zufuhr des sauerstoffhaltigen Gases zu den Lanzen für die Abfuhr der verdrängten Gase aufrecht erhalten wird.

Die Erfindung wird nachstehend anhand der Zeichnung beispielsweise näher erläutert. Es zeigen,

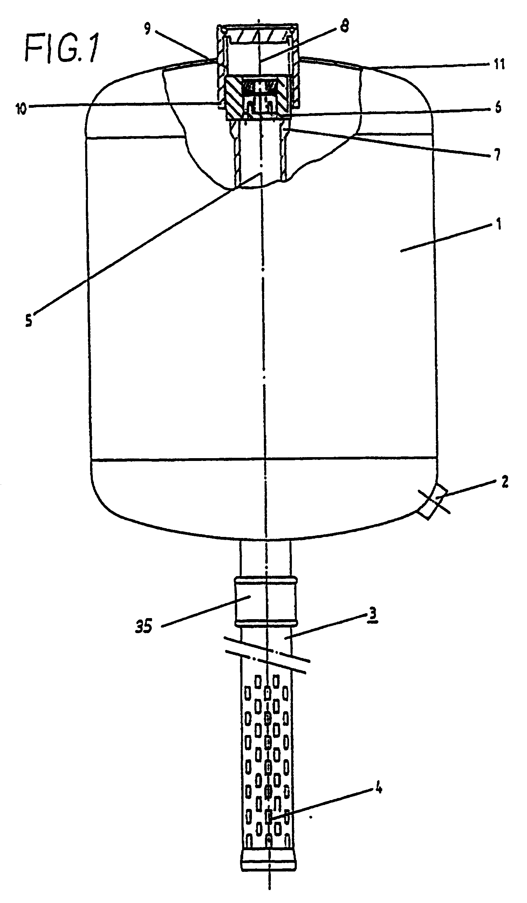

Fig. 1 teilweise im Schnitt, eine zur Ausübung des erfindungsgemäßen Verfahrens geeignete Vorrichtung,
Fig. 2, in gegenüber Fig. 1 größerem Maßstab, ein Detail aus Fig. 1 in einem Achsschnitt,
Fig. 3 das Detail aus Fig. 2 in einer gegenüber Fig. 2 geänderten Lage,
Fig. 4 schematisch eine Anlage zur Belüftung von Müll unter Anwendung des erfindungsgemäßen Verfahrens und der in den Fig. 1 bis 3 gezeigten Vorrichtung, und
Fig. 5 eine gegenüber den Fig. 2 und 3 abgeänderte Variante.

In der Zeichnung ist mit 1 ein Windkessel mit Druckluftanschluß 2 bezeichnet. Aus dem Windkessel 1 wird eine Lanze 3 mit Druckluft oder einem anderen sauerstoffhaltigen Gas versorgt. Die Lanze 3 ist mit einem perforierten Endstück 4 ausgerüstet. Durch die Perforationen dieses Endstückes wird das sauerstoffhaltige Gas nach außen abgegeben. Die Lanze 3 besitzt ein dicht durch die Windkesselwand hindurchgeführtes Rohrstück 5. Das Rohrstück 5 ist mit dem Endstück 4 außerhalb des Windkessels 1 über eine Schraubverbindung 35 verbunden. Das Rohrstück 5 und damit die Lanze 3 wird durch einen Kolben 6, welcher auf der als Dichtungsfläche ausgebildeten ringförmigen Stirnfläche 7 des Rohres 5 aufliegt, abgedichtet. Der Kolben 6 ist Teil eines Schnellentlüftungsventils 8, das, wie im folgenden beschrieben wird, so eingerichtet ist, daß der Kolben 6 bei Erreichen eines einstellbaren Drucks im Windkessel 1 schlagartig zurückspringt und den gesamten Durchgangsquerschnitt des Rohrstückes 5 freigibt, so daß das sauerstoffhaltige, im Windkessel 1 unter Druck gespeicherte Gas explosionsartig über das perforierte Ende der Lanze 3 entweicht. Sobald der Druck im Windkessel abgefallen ist, verschließt der Kolben 6, der unter dem Druck einer in Schließrichtung wirkenden Feder 9 steht, wieder die Öffnung des Rohres 5, bis der eingestellte Druck im Windkessel 1 wieder erreicht ist und die nächste Entleerung explosionsartig erfolgt.

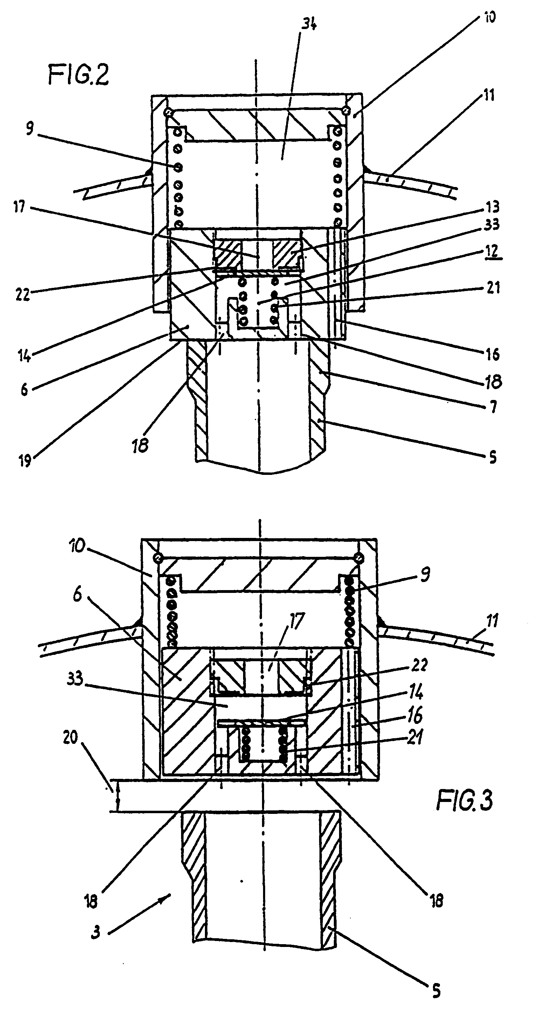

Das Schnellentlüftungsventil 8 in einer bevorzugten Ausführung ist aus Fig. 2 in der Stellung "geschlossen'' ersichtlich, und Fig. 3 veranschaulicht die Stellung "offen''.

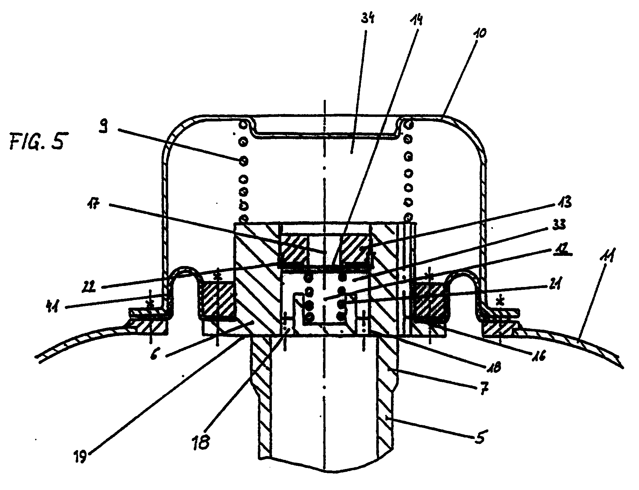

Der Kolben 6 ist in einem Zylinder 10 hin- und herbewegbar, der konzentrisch zum Rohrstück 5 der Lanze 3 in den Kesselboden 11 eingelassen und mit diesem verschweißt ist. Der Kolben 6, die Stirnfläche 7 des Rohres 5, die Feder 9 und der Zylinder 10 bilden das eigentliche Schnellentlüftungsventil 8. Der Kolben 6 kann, wie dies die Fig. 2 und 3 näher zeigen, im Zylinder 10 gleiten, jedoch kann die Bewegung des Kolbens 6 auch verschleißfrei erfolgen, wenn - wie dies Fig. 5 zeigt - der Kolben 6 über eine Rollmembran 41 mit dem Zylinder 10 verbunden ist.

In den Kolben 6 ist ein Plattenventil 12 zur Steuerung der Bewegung des Kolbens 6 eingelassen. Das Plattenventil 12 besteht aus einem mittels Gewinde 22 im Kolben 6 axial verstellbaren Dichtring 13, einer Ventilplatte 14 und einer Feder 15, die bestrebt ist, die Ventilplatte 14 in einer Stellung zu halten, in der sie eine zentrale Durchgangsöffnung 17 des Dichtringes 13 verschließt.

Wird der Windkessel mit dem unter Druck stehenden, sauerstoffhaltigen Gas, z.B. Luft, gefüllt, so befindet sich der Kolben 6 des Schnellentlüftungsventils 8 in der Ausgangsstellung nach Fig. 2. Über eine (gegebenenfalls mehrere) den Kolben 6 durchsetzende Öffnungen 16 gelangt das Gas auch in den über dem Kolben 6 befindlichen Hubraum 34, in welchem sich die Feder 9 befindet. Da das Plattenventil 12 ebenfalls geschlossen ist und sich im Rohrstück 5 und damit in der Lanze 3 nur ein geringer Überdruck von 0,1 - 0,3 bar befindet, wird der Kolben 6 fest auf die Stirnfläche 7 des Rohres 5 gedrückt, bis der Druck im Hubraum 34 so weit angestiegen ist, daß die Ventilplatte 14 des Plattenventils 12 öffnet, wodurch der Druck im Raum über dem Kolben 6 entlüftet wird. Dies ist trotz der Öffnung 16 möglich, da der Öffnungsquerschnitt des Plattenventils um ein Vielfaches größer ist als der der Öffnung 16. Außerdem wird im Moment des Öffnens nicht nur die Ventilplatte 14 in einem dem Querschnitt der Öffnung 17 des Dichtringes 13 entsprechenden Ausmaß mit Druck beaufschlagt, sondern die wesentlich größere Fläche der gesamten Ventilplatte 14. Dadurch bleibt das Plattenventil 12 trotz Druckabfalls im Hubraum 34 offen (Fig. 3) und das Gas kann über die Bohrungen 18 (ca. 6 Stk.) aus dem Raum 33 im Kolben 6 in das Rohrstück 5 entweichen. Der Kolben 6 wird dadurch auf der Seite seiner Feder 9 entlastet und durch den auf der Ringfläche 19 lastenden Luftdruck in den Zylinder 10 getrieben (Fig. 3), wodurch eine ringförmige Öffnung 20 entsteht, deren Fläche größer ist als die Querschnittsfläche des Rohrstückes 5 bzw. der Lanze 3. Das im Windkessel 1 unter Druck stehende Gas kann daher explosionsartig über die Perforation 4 der Lanze 3 in das Erdreich bzw. in die Deponie entweichen. Die Ringfläche 19 wird dadurch geschaffen, daß der Kolben 6 seitlich gegenüber der Stirnfläche des Rohrstükkes 5 vorsteht. Um den Abblasedruck einzuregulieren, ist der Dichtring 13 des Plattenventils 12 mittels des Gewindes 22 axial verstellbar am Kolben 6 angeordnet, wodurch die Feder 21, welche die Ventilplatte 14 belastet, mehr oder weniger vorgespannt werden kann. Dadurch verändert sich der Öffnungsdruck des Plattenventils 12, der zwischen ca. 2 und 10 bar eingestellt werden kann. Die Anzahl der Schüsse, die pro min abgegeben werden können, hängt daher von der pro Zeiteinheit zugeführten Luftmenge und vom eingestellten Öffnungsdruck des Plattenventiles 12 ab. Sie liegt im Regelfall zwischen 2 und 6 Schüssen pro min.

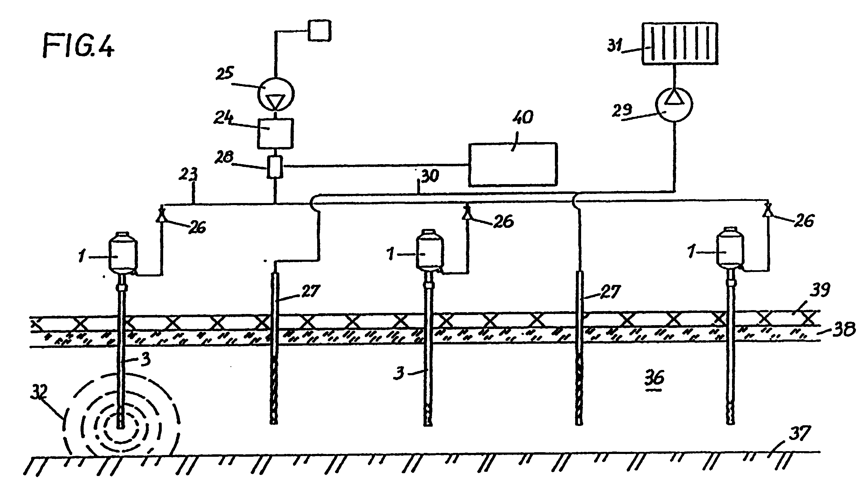

Fig. 4 zeigt das Fließbild einer Belüftungsanlage, die mit erfindungsgemäßen Lanzen 3 zur Aerobisierung einer Hausmülldeponie ausgestattet ist. Die in der Zeichnung mit 36 bezeichnete, zu entsorgende Müllschicht bedeckt den Mutterboden 37 und ist oben durch eine Erdschicht 38 abgedeckt, auf welche Humus 39 aufgezogen ist.

Die Lanzen 3 mit ihren Windkesseln 1 sind über ein Rohrsystem 23 mit einem Druckluftkompressor 25 verbunden, der über einen Pufferwindkessel 24 die Lanzen 3 mit Druckluft versorgt. Zur Abstimmung der Druckluftversorgung können Druckminderventile 26 den Lanzen 3 vorgeschaltet werden.

Ist eine Sauerstoffanreicherung erforderlich, so kann O₂ aus einer O₂-Anlage 40 einer Mischkammer 28 zugefuhrt und der Druckluft dosiert zugemischt werden.

Die Deponiegase, die durch die Erdschicht 38 und den Humusauftrag 39 nur in geringem Maße abziehen können, werden über Sauglanzen 27, einem Leitungsnetz 30 und einer Saugpumpe 29 abgesaugt und einem Biofilter 31 zugeführt.

In Fig. 4 ist die durch die explosionsartige Zufuhr des sauerstoffhaltigen Gases verursachte kugelförmige Schockwelle 32 eingezeichnet, die den gesamten Deponiebereich rund um die jeweilige Lanze 3 erfaßt und dadurch die Sauerstoffzufuhr im ganzen Müllkörper sicherstellt.

## Patentansprüche

1. Verfahren zum Injizieren sauerstoffhaltiger Gase, insbes. Luft, zu kontaminiertem, körnigem oder stückigem Material, z.B. in Mülldeponien, dadurch gekennzeichnet, daß zur Sicherstellung aerober Verhältnisse im gesamten Kontaminierten Bereich das sauerstoffhaltige Gas intermittierend, insbes. mit einer Frequenz von 1/30 bis 1/10 Hz, unter hohem Druck, z.B. im Bereich zwischen 2 bis 10 bar, schlagartig in das kontaminierte Material eingeblasen bzw. eingeschossen wird, wobei die Dauer eines Einblasevorganges bevorzugt im Millisekundenbereich liegt und daß die Behandlung an derselben Stelle durch mehrfachen Sauerstoffeintrag durchgeführt wird, wodurch in situ ein Bioreaktor erzeugt wird.

2. Verfahren nach Anspruch 1, dadurch gekennzeichnet, daß als sauerstoffhaltiges Gas mit Sauerstoff angereicherte Luft eingeblasen bzw. eingeschossen wird.

3. Verfahren nach Anspruch 1 oder 2, dadurch gekennzeichnet, daß die durch das schlagartige Zuführen des sauerstoffhaltigen Gases aus dem kontaminierten Material verdrängten Gase lokal abgesaugt werden, wobei gegebenenfalls das in der Zeiteinheit abgesaugte Volumen größer ist als das in der gleichen Zeiteinheit zugeführte sauerstoffhaltige Gas.

4. Vorrichtung zur Durchführung eines Verfahrens nach einem der Ansprüche 1 bis 3, unter Verwendung von Lanzen zum Einblasen bzw. Einschiessen der sauerstoffhaltigen Gase, dadurch gekennzeichnet, daß die Lanze (3) an einem Ende durch die Stirnfläche eines Kolbens (6) verschließbar ist, der entgegen dem Druck einer Feder (9) in einem Zylinder (10) hin- und herbewegbar, gegebenenfalls gleitbar gelagert ist, der über eine, bevorzugt den Kolben (6) durchsetzende Öffnung (16) mit dem Innenraum eines Windkessels (1) in Verbindung steht, wobei der Kolbenboden in dem der Öffnung der Lanze (3) gegenüberliegenden Bereich mit Bohrungen (18) versehen ist, die in einen im Inneren des Kolbens befindlichen Raum (33) führen, der über eine, durch eine Feder (21) belastete Ventilplatte (14) verschließbare Öffnung (17) mit dem Hubraum (34) des Zylinders (10) des Kolbens (6) verbindbar ist.

5. Vorrichtung nach Anspruch 4, dadurch gekennzeichnet, daß die Lanze (3) in den Windkessel (1) dicht eingesetzt ist, wobei das die Ausblaseperforationen aufweisende Endstück (4) der Lanze (3) außerhalb des Windkessels (1) angeordnet ist.

6. Vorrichtung nach Anspruch 4 oder 5, dadurch gekennzeichnet, daß die durch die Ventilplatte (14) verschließbare Öffnung (17) in einem, in den Kolben (6) eingesetzten, bevorzugt in axialer Richtung des Kolbens (6) verstellbaren Dichtring (13) angeordnet ist.

7. Vorrichtung nach Anspruch 6, dadurch gekennzeichnet, daß der Dichtring (13) in den Kolben (6) eingeschraubt ist.

8. Vorrichtung nach einem der Ansprüche 4 bis 7, dadurch gekennzeichnet, daß der Kolben (6) die Lanze (3) seitlich überragt.

9. Vorrichtung nach einem der Ansprüche 4 bis 8, dadurch gekennzeichnet, daß der Gesamtquerschnitt der im Boden des Kolbens (6) angeordneten Bohrungen (18), die den Innenraum der Lanze (3) mit dem Raum (33) im Kolben (6) verbinden, größer ist als der Querschnitt der Öffnung (16), über welche der Hubraum (34) im Zylinder (10) mit dem Windkessel (1) verbunden ist.

10. Vorrichtung nach einem der Ansprüche 4 bis 9, dadurch gekennzeichnet, daß der Kolben über eine Rollmembran (41) mit dem Zylinder (10) verbunden ist (Fig. 5).

11. Vorrichtung nach einem der Ansprüche 4 bis 10, dadurch gekennzeichnet, daß für die Abfuhr der verdrängten Gase, an eine Saugpumpe (29) angeschlossene Lanzen (27) vorgesehen sind, wobei gegebenenfalls die Saugpumpe (29) auslaßseitig an ein Filter (31) angeschlossen ist, wobei gegebenenfalls eine auslaßseitig an ein Filter (Biofilter) (31) angeschlossene Saugpumpe (29) so dimensioniert ist, daß dauernd ein Druckgefälle von den Lanzen (3) für die schlagartige Zufuhr des sauerstoffhaltigen Gases Zu den Lanzen (27) für die Abfuhr der verdrängten Gase aufrecht erhalten wird (Fig. 4).

## Claims

1. Method of injecting oxygen-containing gases, particularly air, into contaminated, granular or particulate material, e.g. in rubbish dumps, characterised in that, for the purpose of ensuring aerobic conditions in the entire contaminated area, the oxygen-containing gas is intermittently blown or injected impulsively into the contaminated material, particularly with a frequency of 1/30 to 1/10 Hz, at high pressure, e.g. in the range between 2 to 10 bar, the duration of an injection process preferably lying in the millisecond range, and that the treatment is effected at the same position by the repeated introduction of oxygen, whereby a bioreactor is produced in situ.

2. Method as claimed in Claim 1, characterised in that air enriched with oxygen is blown or injected in as the oxygen-containing gas.

3. Method as claimed in Claim 1 or 2, characterised in that the gases displaced from the contaminated material by the impulsive supply of the oxygen-containing gas are locally drawn off, whereby the volume drawn off per unit time is possibly greater than the oxygen-containing gas supplied in the same unit of time.

4. Apparatus for carrying out a method as claimed in one of Claims 1 to 3 utilising lances for blowing or injecting in the oxygen-containing gases, characterised in that the lance (3) is sealable at one end by the end surface of a piston (6) which is mounted, optionally slidably, so as to be movable back and forth, against the pressure of a spring (9) in a cylinder (10) which is in communication with the interior of a blast box (1), via an opening (16), which preferably passes through the piston (6), the base of the piston being provided in the region opposite to the opening of the lance (3) with bores (18) which lead into a space (33) which is situated in the interior of the piston and which is connectable with the swept volume (34) of the cylinder (10) of the piston (6) by means of an opening (17) which may be closed by a valve plate (14) acted on by a spring (21).

5. Apparatus as claimed in Claim 4, characterised in that the lance (3) is sealingly inserted in the blast box (1), whereby the end member (4) affording the blast perforations of the lance (3) is disposed outside the blast box (1).

6. Apparatus as claimed in Claim 4 or 5, characterised in that the opening (17), which is sealable by means of the valve plate (14) is arranged in a sealing ring (13), which is inserted into the piston (6) and is movable, preferably in the axial direction of the piston (6).

7. Apparatus as claimed in Claim 6, characterised in that the sealing ring (13) is screwed into the piston (6).

8. Apparatus as claimed in one of Claims 4 to 7, characterised in that the piston (6) projects laterally beyond the lance (3).

9. Apparatus as claimed in one of Claims 4 to 8, characterised in that the total cross-sectional area of the bores (18), which are arranged in the base of the piston (6) and connect the interior of the lance (3) to the space (33) in the piston (6), is larger than the cross-sectional area of the opening (16) by means of which the swept volume (34) in the cylinder (10) is connected to the blast box (1).

10. Apparatus as claimed in one of Claims 4 to 9, characterised in that the piston is connected to the cylinder (10) by means of a rolling membrane (41) (Fig. 5).

11. Apparatus as claimed in one of Claims 4 to 10, characterised in that lances (27) connected to a suction pump (29) are provided for the discharge of the displaced gases, whereby the outlet of the suction pump (29) is optionally connected to a filter (31), whereby a suction pump (29), whose outlet is optionally connected to a filter (biofilter) (31), is so dimensioned that a pressure gradient is permanently maintained from the lances (3) for the impulsive supply of the oxygen-containing gas to the lances (27) for the discharge of the displaced gases (Fig. 4).

## Revendications

1. Procédé d'injection de gaz contenant de l'oxygène, en particulier d'air, dans un matériau contaminé en grains ou en morceaux, par exemple dans des dépôts d'ordures, caractérisé en ce que, pour garantir des conditions aérobies dans l'ensemble de la zone contaminée, le gaz contenant de l'oxygène est insufflé ou injecté par à-coups dans le matériau contaminé, de façon intermittente, en particulier selon une fréquence de 1/30 à 1/10 Hz, à haute pression, par exemple dans une plage s'étendant entre 2 et 10 bar, la durée d'une insufflation étant, de préférence, de l'ordre de la milliseconde, et en ce que le traitement à un même endroit est effectué par apport multiple d'oxygène, réalisant ainsi in situ un réacteur biologique.

2. Procédé selon la revendication 1, caractérisé en ce que le gaz contenant de l'oxygène qui est insufflé ou injecté est de l'air enrichi en oxygène.

3. Procédé selon la revendication 1 ou 2, caractérisé en ce que les gaz chassés du matériau contaminé par l'introduction par à-coups du gaz contenant de l'oxygène sont aspirés localement, le volume aspiré au cours de l'unité de temps étant, le cas échéant, plus important que celui du gaz contenant de l'oxygène qui est introduit au cours de la même unité de temps.

4. Dispositif de mise en oeuvre d'un procédé selon l'une des revendications 1 à 3, utilisant des lances pour insuffler ou injecter les gaz contenant de l'oxygène, caractérisé en ce que la lance (3), à une extrémité, est susceptible d'être obturée par la face frontale d'un piston (6) qui, à l'encontre de la pression d'un ressort (9) est mobile en translation à l'intérieur d'un cylindre (10) et est, le cas échéant, monté coulissant, cylindre qui, par l'intermédiaire d'une ouverture (16) traversant de préférence le piston (6), communique avec l'intérieur d'un réservoir d'air (1), la tête de piston étant pourvue, dans la zone opposée à l'ouverture de la lance (3), de perçages (18) qui conduisent dans un espace (33) se trouvant à l'intérieur du piston, qui est susceptible d'être mis en communication avec la cylindrée (34) du cylindre (10) du piston (6), par l'intermédiaire d'une ouverture (17) pouvant être obturée par une lame de soupape (14) placée sous l'action d'un ressort (21).

5. Dispositif selon la revendication 4, caractérisé en ce que la lance (3) est insérée dans le réservoir d'air (1) de façon étanche, l'embout (4) de la lance (3) présentant des perforations de soufflage étant situé à l'extérieur du réservoir d'air (1).

6. Dispositif selon la revendication 4 ou 5, caractérisé en ce que l'ouverture (17) susceptible d'être obturée par la lame de soupape (14) est ménagée dans un anneau d'étanchéité (13) monté dans le piston (6), déplaçable de préférence dans le sens axial du piston (6).

7. Dispositif selon la revendication 6, caractérisé en ce que l'anneau d'étanchéité (13) est vissé dans le piston (6).

8. Dispositif selon l'une des revendications 4 à 7, caractérisé en ce que le piston (6) dépasse latéralement de la lance (3).

9. Dispositif selon l'une des revendications 4 à 8, caractérisé en ce que la section globale des perçages (18) situés sur la tête du piston (6), qui mettent l'intérieur de la lance (3) en communication avec l'espace (33) se trouvant à l'intérieur du piston, est plus importante que la section de l'ouverture (16) par l'intermédiaire de laquelle la cylindrée (34) du cylindre (10) est reliée au réservoir d'air (1).

10. Dispositif selon l'une des revendications 4 à 9, caractérisé en ce que le piston est relié au cylindre (10) par l'intermédiaire d'une membrane roulée (41) (Figure 5).

11. Dispositif selon l'une des revendications 4 à 10, caractérisé en ce que, pour l'évacuation des gaz qui ont été chassés, des lances (27) raccordées à une pompe aspirante (29) sont prévues, la pompe aspirante (29) étant, le cas échéant, raccordée, du côté échappement, à un filtre (31), une pompe aspirante (29) raccordée, le cas échéant, à un filtre (31) (biofiltre), du côté échappement, présentant des dimensions telles que soit constamment maintenue une différence de pression entre les lances (3) destinées à l'introduction par à-coups du gaz contenant de l'oxygène et les lances (27) destinées à l'évacuation des gaz qui ont été chassés (Figure 4).
